# EUROPEAN PATENT APPLICATION

(11) **EP 4 668 760 A1**
(43) Date of publication of application: **24.12.2025**
(21) Application number: 24756317.4
(22) Date of filing: 08.02.2024
(51) Int. Cl.: H04N 21/44

(54) **VIDEO EDITING METHOD AND APPARATUS, DEVICE, AND MEDIUM**

(30) Priority: 16.02.2023 CN 202310141149
(71) Applicant: Beijing Zitiao Network Technology Co., Ltd., Beijing 100190 (CN)
(72) Inventor: CHANG, Lisheng, Beijing 100028 (CN); ZHENG, Hanqi, Beijing 100028 (CN); LI, Ping, Beijing 100028 (CN); YU, Xiaohui, Beijing 100028 (CN); XU, Yufeng, Beijing 100028 (CN); LI, Jun, Beijing 100028 (CN); CHEN, Yifei, Beijing 100028 (CN); TANG, Qihui, Beijing 100028 (CN)
(74) Representative: Grünecker Patent- und Rechtsanwälte PartG mbB
(86) International application number: PCT/CN2024/077033
(87) International publication number: WO 2024/169945

(57) **Abstract**

The embodiments of the disclosure relate to a method, an apparatus, a device and a medium for video editing, and the method includes: in response to a user selecting a target video template from a plurality of video templates, displaying material replacement controls of a plurality of material categories and a template video frame image corresponding to the target video template on an edit page; in response to the user selecting a target replacement control from the plurality of material replacement controls, switching to a target replacement page corresponding to the target replacement control; obtaining a content in the content input area or a material selected by the user on the target replacement page as an updated material, and replacing a template material corresponding to the updated material in the target video template with the updated material; and editing the material in the target video template with the material replaced based on the editing operation sequence, generating a preview video frame image, and displaying the preview video frame image on the edit page. Embodiment of the disclosure effectively improves the convenience of editing video by a population such as the elderly, and better guarantees user experience.

## Description

**This** application claims the priority of Chinese Patent Application No. 202310141149.0, entitled "Method, Apparatus, Device, and Medium for Video Editing" filed on February 16, 2023, the entire content of which is incorporated herein by reference.

### FIELD

The present disclosure relates to the field of video processing technology, and in particular, to a video editing method, apparatus, device, and medium.

### BACKGROUND

At present, increasing people use video editing software to edit captured materials such as photos, videos, etc., to obtain new expressive videos for storing or sharing. However, inventors have found that a population such as a group of the elderly, a group with low information technology level, a group with poor understanding ability or the like may have certain inconvenience when using existing video editing software to edit video, and the user experience is poor.

### SUMMARY

**In** order to solve the above technical problem or at least partially solve the above technical problem, the present disclosure provides a video editing method, apparatus, device and medium.

The embodiment of the present disclosure provides a video editing method, and the method comprises: in response to a user selecting a target video template from a plurality of video templates, displaying material replacement controls of a plurality of material categories and a template video frame image corresponding to the target video template on an edit page, wherein the template video frame image is formed by editing a template material corresponding to the target video template based on an editing operation sequence corresponding to the target video template; in response to the user selecting the target replacement control from the plurality of material replacement controls, switching to a target replacement page corresponding to the target replacement control, wherein an alternative material or a content input area is displayed in the target replacement page; obtaining a content in the content input area or a material selected by the user on the target replacement page as an updated material, and replacing a template material corresponding to the updated material in the target video template with the updated material; and editing the material in the target video template with the material replaced based on the editing operation sequence, generating a preview video frame image, and displaying the preview video frame image on the edit page.

Optionally, before in response to the user selecting the target video template from the plurality of video templates, the method further includes: displaying a plurality of theme categories on a first display page; and in response to the user selecting a target theme category from the plurality of theme categories, displaying a video template under the target theme category on a second display page.

Optionally, the step of displaying the video template under the target theme category on the second display page comprises: displaying one of a plurality of video templates under the target theme category on the second display page; in response to a template switching operation of the user, displaying the switched video template on the second display page based on a predetermined sorting of the plurality of video templates under the target theme category.

Optionally, the step of displaying a plurality of theme categories on a first display page comprises: displaying a plurality of theme category cover images on the first display page, wherein the theme category cover image is marked with a theme category name.

Optionally, material replacement controls of the plurality of material categories include an image material replacement control, a text replacement control, and a music replacement control.

Optionally, in response to that the target replacement control includes an image material replacement control, a classified image material is displayed on the target replacement page based on a predetermined classification dimension.

Optionally, the classification dimension includes one or more of a time dimension, a location dimension, and a theme dimension.

Optionally, the method further includes: identifying a material selected by the user in the image material based on a specified manner on the target replacement page, wherein the specified manner includes one or more of a highlighting manner, a digital marking manner, and a slot filling manner.

Optionally, in response to that the target replacement control includes a text replacement control, a content input area for the user to input text by handwriting is displayed on the target replacement page.

Optionally, in response to that the target replacement control includes a music replacement control, a slidable candidate music list is displayed on the target replacement page, and a number of pieces of candidate music simultaneously displayed on the target replacement page by the candidate music list is not higher than a predetermined number threshold.

Optionally, a video frame display area is disposed on the edit page, and the video frame display area is configured to display the template video frame image or a preview video frame image; a ratio of the video frame display region to the edit page is greater than a predetermined threshold, and the plurality of material replacement controls float on the video frame display area.

Optionally, the method further includes: in response to receiving a confirmation instruction of the user for the preview video frame image, synthesizing the preview video frame image into a target video.

The embodiment of the invention further provides a video editing apparatus which comprises a first displaying module configured to, in response to a user selecting a target video template from a plurality of video templates, displaying material replacement controls of a plurality of material categories and a template video frame image corresponding to the target video template on an edit page, wherein the template video frame image is formed by editing a template material corresponding to the target video template based on an editing operation sequence corresponding to the target video template; a page switching module configured to, in response to the user selecting a target replacement control from the plurality of material replacement controls, switch to the target replacement page corresponding to the target replacement control, wherein an alternative material or a content input area is displayed in the target replacement page; a replacing module configured to obtain a content in the content input area or a material selected by the user on the target replacement page as an updated material, and to replace a template material corresponding to the updated material in the target video template with the updated material; and a second displaying module configured to edit the material in the target video template with the material replaced based on the editing operation sequence, to generate a preview video frame image, and to display the preview video frame image on the edit page.

An embodiment of the present disclosure further provides an electronic device, comprising: a processor and a memory configured to store instructions executable by the processor, the processor being configured to read the executable instructions from the memory and execute the instructions to implement the video editing method provided in the embodiments of the present disclosure.

An embodiment of the present disclosure further provides a computer-readable storage medium, wherein the storage medium stores a computer program, and the computer program is configured to perform the video editing method provided in the embodiments of the present disclosure.

An embodiment of the present disclosure further provides a computer program product, including a computer program, wherein the computer program, when executed by a processor, implements the video editing method provided in any of the embodiments of the present disclosure.

The video editing flow provided by above technical solutions of the embodiments of the present disclosure is simple and easy to understand, highly oriented, and can well guide a user to firstly select a video template and then select the required updated material through a material replacement control, and directly replace a template material corresponding to the updated material in the video template by the updated material, so as to the quickly generate a preview video frame image based thereupon. Embodiments of the present disclosure provide material replacement controls of a plurality of material categories for the user, different material replacement controls can correspond to different replacement pages, which better facilitates user's understanding and operating. By replacing the material in the video template, an effect required by the user can be quickly and conveniently achieved. In summary, the above mode effectively improves the convenience of editing video by a population such as the elderly, and better guarantees user experience.

It should be understood that the content described in this section is not intended to identify essential or important features of embodiments of the present disclosure, nor is it intended to limit the scope of the present disclosure. Other features of the present disclosure will become easy to understand from the following description.

### BRIEF DESCRIPTION OF DRAWINGS

The drawings herein are incorporated in and constitute a part of this specification, illustrate embodiments consistent with the present disclosure and, together with the description, serve to explain the principles of the present disclosure.

In order to more clearly illustrate the technical solutions in the embodiments of the present disclosure or in the prior art, the accompanying drawings required in the description of the embodiments or the prior art will be briefly introduced below, and it is obvious to those ordinary skilled in the art that other drawings may be obtained according to these drawings without paying creative work.
FIG. 1 is a schematic flowchart of a video editing method provided by an embodiment of the present disclosure;
FIG. 2 is a schematic diagram of a first display page provided by an embodiment of the present disclosure;
FIG. 3 is a schematic diagram of a second display page provided by an embodiment of the present disclosure;
FIG. 4 is a schematic diagram of an edit page provided by an embodiment of the present disclosure;
FIG. 5 is a schematic diagram of a target replacement page provided by an embodiment of the present disclosure;
FIG. 6 is a schematic diagram of an identifier of a target image material provided by an embodiment of the present disclosure;
FIG. 7 is a schematic diagram of an edit page provided by an embodiment of the present disclosure;
FIG. 8 is a schematic structural diagram of a video editing apparatus provided by an embodiment of the present disclosure; and
FIG. 9 is a schematic structural diagram of an electronic device provided by an embodiment of the present disclosure.

### DETAILED DESCRIPTION

In order to be able to more clearly understand the above objects, features and advantages of the present disclosure, the solutions of the present disclosure will be further described below. It should be noted that, in case of no conflict, embodiments and features in the embodiments of the present disclosure may be combined with each other.

Many specific details are set forth in the following description to facilitate a thorough understanding of the present disclosure, but the present disclosure may also be implemented in other ways other than those described herein; it is apparent that the embodiments in the specification are only a part of the embodiments of the present disclosure, not all embodiments.

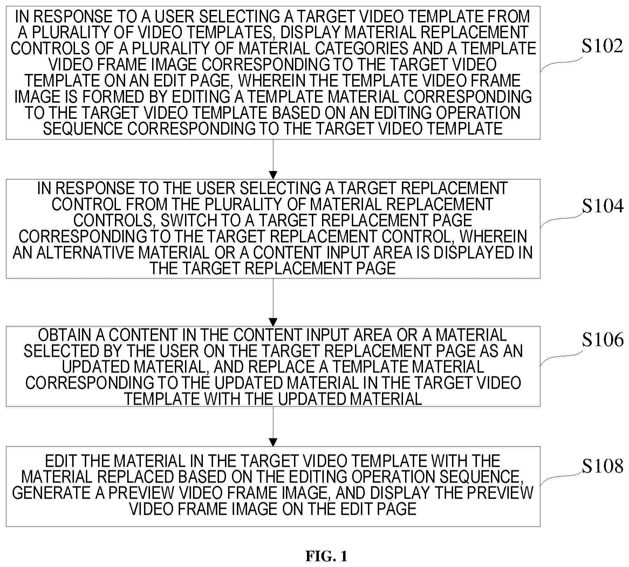

FIG. 1 is a schematic flowchart of a video editing method provided by an embodiment of the present disclosure, which can be performed by a video editing apparatus, and the video editing apparatus can be implemented by adopting software and/or hardware and integrated into an electronic device. As shown in FIG. 1, the method mainly includes the following steps S102 to S108.

Step S102, in response to a user selecting a target video template from a plurality of video templates, displaying material replacement controls of a plurality of material types and a template video frame image corresponding to the target video template on an edit page, wherein the template video frame image is obtained by editing a template material corresponding to the target video template according to an editing operation sequence corresponding to the target video template.

In practical applications, a plurality of video templates may be first displayed for the user for the user to select a target video template meeting requirements therefrom. The video template includes a template material and an editing operation sequence, and editing operation sequences corresponding to different video templates are different; and the editing operation sequence indicates a specific type of editing operation (such as adding a special effect, a transition field, a text addition, and the like) adopted to edit the template material and a sequence of multiple types of editing operations. The effect video corresponding to the video template may be obtained by editing the template material according to the editing operation sequence. When multiple video templates are displayed for a user, a theme cover of the video templates can be displayed, and effect videos corresponding to the video templates can also be played, so that the user can intuitively feel the effect of editing the video template.

After the user selects the target video template, it can be directly switched to the edit page, on which not only the template video frame image corresponding to the target video template but also material replacement controls of a plurality of material categories are displayed, wherein the material categories comprises an image category, a text category and a music category, and correspondingly, the material replacement controls comprise an image material replacement control, a text replacing control and a music replacing control. In the embodiments of the present disclosure, fully considering that a user may belong to a special population such as a group of the elderly, a group with low information technology level, or the like, a complex editing function is no longer provided herein, but a material replacement function is directly provided for the user, so that the user may directly replace the material in a video template. For example, one or more of the influence material, the text material and the music material used for video template replacement may not only facilitate understanding and using by such special population, but also substantially meet the video editing requirements of such special population. In addition, the above manner displays only a few basic material replacement controls, and on the basis of giving an edit guidance and prompt to the user, pages can be simplified as much as possible, so as to prevent the complex multifunctional edit information provided simultaneously on one edit page from bringing the user a feeling of having no way to start as in the related art and facilitate a quick operation of the user.

Step S104, in response to the user selecting a target replacement control from a plurality of material replacement controls, switching to a target replacement page corresponding to the target replacement control, wherein an alternative material or a content input area is displayed on the target replacement page.

In the embodiments of the present disclosure, considering that a special population such as the elderly is generally poor in processing capability of high-density information and information of all the editing functions is presented on the same page, which makes information on the page relatively large in amount and difficult to understand in the related art, the embodiments of the present disclosure may firstly clearly present several basic material replacement controls on an edit page, and set a separate edit page corresponding to each edit control. Replacement pages corresponding to different material replacement controls are different, that is, the user may be cut into the edit entry required according to an edit demand and replace the template material in a targeted manner, and present different information through different replacement pages respectively, which not only effectively reduces the amount of information on the edit page, but also facilitates understanding and operating of special population such as the elderly.

Step S106, obtaining a content in the content input area or a material selected by the user on the target replacement page as an updated material, and replacing a template material corresponding to the updated material in the target video template by the updated material.

For example, the target replacement control is a music replacement control, a music list is presented on the target replacement page, and music selected by the user on the target replacement page can be replaced with the template music in the target video template. As another example, the target replacement control is an image replacement control, and a user selectable image material is presented on the target replacement page, for example, the image material may be a material such as a photo and/or a video stored by a user in a local album, and a photo and/or a video selected by the user may be replaced with an image material in the target video template. As another example, the target replacement control is a text replacement control, and a content input area is presented on the target replacement page, then the text input by the user in the content input area may be replaced with the text in the target video template.

Step S108, editing the material in the target video template with material(s) replaced according to an editing operation sequence, generating a preview video frame image, and displaying the preview video frame image on the edit page.

It may be understood that all materials in the target video template may be replaced by the user, or only some materials in the target video template may be replaced. Therefore, materials in the target video template with material(s) replaced may all be material(s) updated by the user, or may include not only a part of template materials but also material(s) updated by the user. A preview video frame image may be obtained via rendering for the user to preview by editing the current material in the target video template with material(s) replaced using an editing operation sequence. In practical applications, the preview video frame image may directly replace the template video frame image and be displayed on the edit page, and it may be understood that there may be multiple preview video frame images being played sequentially, and the user may intuitively feel the presentation effect of the video frame image after he/she changes material(s). If the user is satisfied with the effect and confirms its export, the target video may be generated based on the preview video frame image, and the user may save the target video according to requirement(s) or publish the target video to the specified platform. If the user is not satisfied with a presentation effect of the current preview video frame image, the plurality of material replacement controls on the edit page may still be used to continue material replacement, and then a new preview video frame image will be generated again. By means of the above way, on the basis of the selected target video template, the user does not need to perform a complex editing operation and only needs to replace material(s) in the template. Embodiments of the present disclosure can automatically edit material(s) in the target video template with material(s) replaced according to an editing operation sequence corresponding to the target template video, quickly and efficiently achieve an editing effect corresponding to the target template video, which can greatly save video editing time and improve video editing efficiency.

To sum up, the video editing process provided by the above technical solution of embodiments of the present disclosure is simple, easy to understand, and highly oriented, can well guide a user to firstly select a video template and then select the required updated material through a material replacement control, and directly replace a template material corresponding to the updated material in the video template by the updated material, so as to quickly generate a preview video frame image based thereupon. Embodiments of the present disclosure provide material replacement controls of a plurality of material categories for the user, different material replacement controls can correspond to different replacement pages, which facilitates user's understanding and operating. By replacing the material in the video template, an effect required by the user can be quickly and conveniently achieved. In summary, the above mode effectively improves the convenience of editing video by a population such as the elderly, and better guarantees user experience.

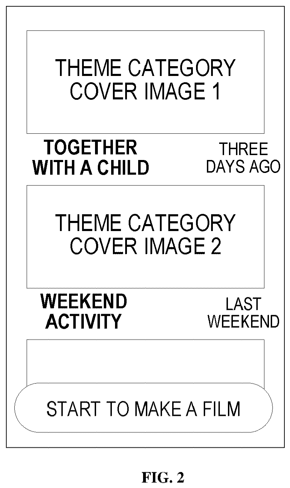

In some implementation examples, before in response to a user selecting a target video template from a plurality of video templates, the following may be performed with reference to steps (1) and (2):
(1)displaying a plurality of theme categories on the first presentation page. In practical applications, to facilitate a user to select a template, embodiments of the present disclosure may divide the plurality of video templates into a plurality of theme categories. For example, the theme category may include categories such as "together with a child", "weekend activity", "outdoor outing", "square dancing", "playing a chess", etc., to facilitate a user to be able to quickly select a target theme category meeting the current material editing requirement(s) according to the theme categories, thereby efficiently finding a video template matching the target theme category. A representation form of the theme category on the first display page is not limited. For example, each theme category may be embodied in a form of a text label, or each theme category may be embodied in a graphic and text form.
   In some specific implementation examples, a plurality of theme category cover images may be displayed on the first display page, wherein the theme category image chart is marked with a theme category name. For example, the cover image configured for the theme category "square dancing" is an image of a square dance, and the cover image configured for the theme category "together with a child" is an image of accompanying an old person and a child. The user can intuitively and conveniently learn theme category information through the theme category cover image. For ease of understanding, reference may be made to a schematic diagram of a first display page shown in FIG. 2, which schematically shows a theme category cover image and a theme category name marked below the theme category cover image. In addition, other information such as the latest update time of a theme category may be further annotated, which is not limited herein. In this way, the user can clearly and intuitively view the currently selectable theme categories, and the user can switch the theme categories displayed on the current display page through an operation such as finger sliding-up etc., thereby browsing more theme categories and selecting the required target theme category therefrom. Considering that the user belongs to a special population such as the elderly or the like, exemplarily, the number of theme category cover images appearing simultaneously on the first display page does not exceed a predetermined number, or a ratio of the size of the theme category cover image to the size of the first display page is greater than a predetermined threshold, so that the user can clearly view a relatively large cover image.
(2) In response to the user selecting the target theme category from the plurality of theme categories, displaying a video template under the target theme category on the second display page.

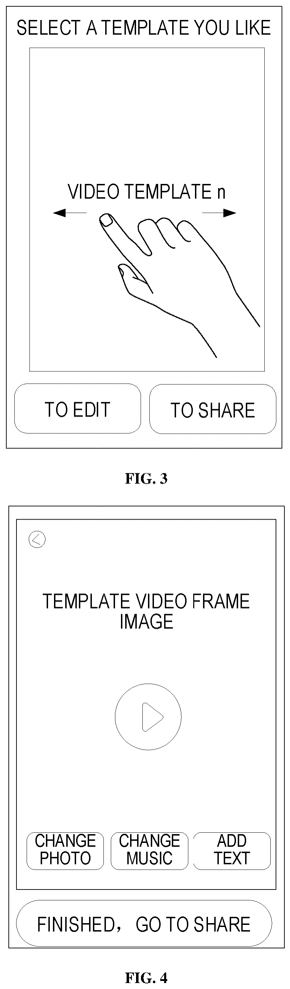

In practical applications, the theme category clicked by the user may be used as the target theme category selected by the user, and after the user selects the target theme category, the user may be switched from the first display page to the second display page to display a plurality of video templates belonging to the target theme category for user selection. In some implementations, video template(s) under one or more target theme categories may be displayed on the second display page, and in an actual application, a picture content of the video template may be displayed on the second display page. In a specific implementation, the picture content may be represented in a form of a representative image, or may be represented in a form of an effect video of the video template, that is, the second display page may directly display a template representative image for the user, or may display an effect video of the template for the user, so that the user clearly knows the presentation effect of the template. The user may switch the video template displayed on the second display page in a manner such as a finger sliding leftward-and-rightward or a finger sliding up-and-down etc., and in order to facilitate the user to clearly view the video template, the number of video templates displayed on the second display page should not be higher than a predetermined number threshold. In some specific implementations, an image content of one of the plurality of video templates under the target theme category may be displayed on the second display page; and then, in response to a template switching operation of the user, the image content of the switched video template is displayed on the second display page based on a predetermined sorting of the plurality of video templates under the target theme category. Through the above example, the user can view only the image content of one video template at a time, which is more clear and intuitive, and avoid the inconvenience of viewing due to image contents of the multiple video templates simultaneously displayed on the second display page. If the requirement is not met, the user may replace the video template displayed on the second display page through a video switching operation until the target video template meeting the requirement is found. For ease of understanding, reference may be made to a second display page schematic shown in FIG. 3, and only one video template (assuming video template n) is displayed on the second display page, and the user may switch video template n - 1 or video template n + 1 by sliding a finger to the left or the right, so as to clearly browse each video template.

After the user selects the target video template, he/she may directly enter an edit page, referring to a schematic diagram of an edit page shown in FIG. 4, on which a video frame display area and material replacement controls of a plurality of material categories are shown. In FIG. 4, material replacement controls of the plurality of material categories are respectively an image material replacement control, a text replacement control, and a music replacement control, and the controls are identified by "replacing photos", "adding text", and "changing music", respectively, which is easier to understand. These three types of replacement controls can meet the vast majority of video edit requirements of a population such as a group of the elderly, a group with low information technology level, or the like, and are more convenient for user to understand and operate. If the user enters the edit page after selecting the target video template, the video frame display area on the edit page firstly displays a template video frame image corresponding to the target video template, and the display area can play the template video frame image, thereby presenting a video presentation effect of the template for the user. In addition, material replacement controls may float on the video frame display area, which not only facilitates the user to determine the material category required to be replaced on the basis of sensing the template video presentation effect and under the guidance of multiple material replacement controls so as to trigger a corresponding material replacement control, but also makes the setting mode of the above edit page simpler and makes a ratio of the video frame display area to the edit page greater than a predetermined threshold. For example, it can be displayed almost in full screen, so that a population with poor eyesight such as an elder user etc. can clearly feel a video picture effect. A plurality of material replacement controls floating on a video frame display area does not occupy extra area of the page, that is, will not be reduce the area of the video frame display area, so that a large screen display of the video picture can be fully ensured, and the user can be guaranteed to have a good sense of viewing.

According to the embodiment of the invention, different material replacement controls can be set, so that a user can be cut into different material replacement pages to perform material replacement operations, which can not only facilitate user's understanding and operation, but also effectively reduce information density. The following sets forth and describes replacement pages displayed after the material replacement control corresponding to each material category is triggered respectively.

When the target replacement control triggered by a user includes an image material replacement control, a classified image material is displayed on the target replacement page according to a predetermined classification dimension, and the image material includes a photo and a video. That is, in order to further facilitate the user to select the required material, when displaying image materials for the user to select, the embodiment of the present disclosure may classify the image materials of the user according to a predetermined classification dimension, and display the classified image material to the user. For example, classification dimensions include one or more of a time dimension, a location dimension, and a theme dimension. Compared with directly displaying materials such as all the photos/videos or the like in a user's album to the user in the related art, the embodiment of the present disclosure may firstly classify the image material selectable by a user according to a predetermined classification dimension, which better facilitates the user to quickly select the photo needed to be edited according to requirement(s). Considering that most users adopt image materials with commonality when editing materials, such as image materials captured in one day, image materials captured in the same place, or image materials with the same theme such as a character theme, a mountain theme, or the like, by classifying image materials of the user according to a predetermined classification dimension, a creation habit of the user is better met, and the user can be facilitated to quickly select required image material. In addition, by classifying and modularizing image materials through the above classification mode, the rang of a user's browsing behavior can be clearly defined so as to reduce a feeling of having no way to start caused by information overload for the user and improve a material selection efficiency of the user.

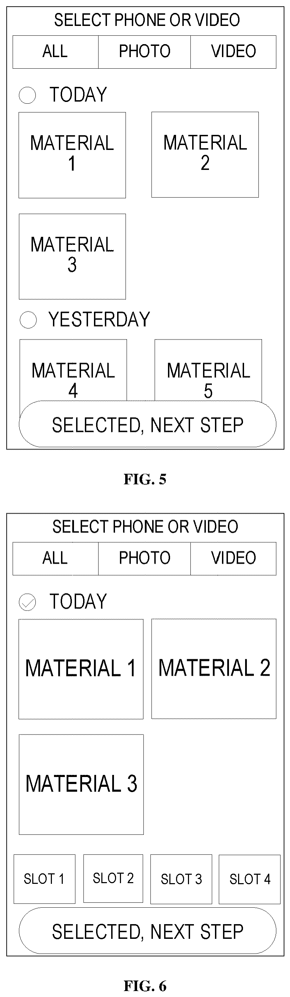

Taking the classification dimension being a time dimension as an example, reference may be made to a schematic diagram of a target replacement page as shown in FIG. 5, where the target replacement page is an image material selection page. By classifying image materials through a time dimension such as today, yesterday, etc., it is more convenient for a user to select, and a user's creation habit is better met. It should be noted that FIG. 5 is merely an exemplary description which simply illustrates a time dimension such as "today", "yesterday" or the like, in practical applications, classification through a time dimension may also be performed in a manner such as "one day", "three days ago", "last weekend" and the like, or may directly be performed in a date manner such as Day X, Month X, etc. In addition, in practical applications, an image material in each category may also support one-click selection, thereby further improving convenience of selecting the image material by the user. In practical applications, the user may also zoom the image material displayed in the target replacement page. For example, by means of double-finger operation, the material may be enlarged or reduced. The user may set a size of the image material displayed in the target replacement page according to requirement(s), which is not limited herein.

In order to facilitate the user to clearly know the selected image material, the method further includes: identifying a material (hereinafter referred to as target image material) selected by the user in image materials in a specified manner on the target replacement page. The specified manner includes one or more of the following: a highlighting manner, a digital marking manner, and a slot filling manner, wherein the highlighting manner includes highlighting the target image material to distinguish from other image materials, the digital marking manner includes performing a digital marking at the target image material to indicate that the user has selected the material and a sequence number of the material in currently selected materials, and the slot filling mode includes setting a plurality of slots at the lower end of the material selection page, the number of slots matching the number of materials used by the target video template. For ease of understanding, reference may be made to the schematic diagram of the identifier of the target image material shown in FIG. 6, which show both the highlight manner (material 1) and the slot filling manner. Specifically, if material 1 selected acts as the target original material, an image of material 1 is automatically filled in slot 1. In the above manner, the user can clearly know the selected material at a glance, which is more beneficial for the user to perform a material selection operation, and what you see is what you get, which can make the user construct a use concept of "segment connection" in selected materials by click.

Considering that a part of population such as the elderly etc. is not good at spellings using a pinyin input method (on the one hand, problems such as spelling mistakes may exist due to reasons such as dialects or non-standard pronunciations etc., and on the other hand, a keyboard provided to a user by a pinyin input method is usually small and inconvenient for a user to operate), in case the target replacement control includes a text replacement control, a content input area for a user to input texts by handwriting is displayed on the target replacement page, and the user may directly input texts by handwriting, which is more convenient and faster. In case the target replacement control includes a music replacement control, a slidable candidate music list may be displayed on the target replacement page, and the number of pieces of candidate music simultaneously displayed on the target replacement page by the candidate music list is not higher than a predetermined number threshold, for example, each time only 4 pieces of candidate music is shown. Compared with the case where more candidate music is displayed on the page densely and simultaneously, the foregoing manner provided by the embodiment of the present disclosure may effectively reduce information density, and by limiting the number of pieces of candidate music displayed simultaneously, it may be more convenient for a special population such as elderly users etc. to select.

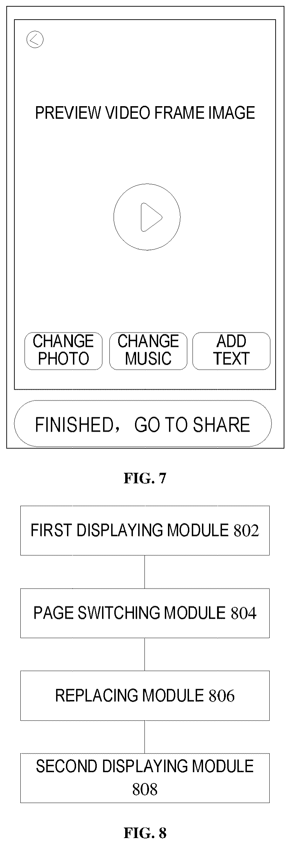

In summary, by setting different replacement controls and different replacement pages for different material categories, the page information density can be effectively reduced, which better facilitates the user's understanding and operating. The user can replace the material in the template by flexibly editing it, so as to adopt the material he/she replaces on a template basis to quickly and efficiently generate a video he/she requires. In a specific implementation, the material in the target video template with material(s) replaced may be edited according to an editing operation sequence, a preview video frame image may be generated, and the preview video frame image may be displayed on an edit page. FIG. 7 is a schematic diagram of an edit page, which differs from FIG. 4 in that the content displayed in the video frame image display area in FIG. 7 is a preview video frame image for a user to preview a video effect after editing based on the target video template. The user may replace photo, music or text again on this basis, or may directly share the video after confirmation.

In order to make the user clearly view a video frame picture, a ratio of the video frame display area in the edit page to the edit page is greater than a predetermined threshold, and the video frame display area is configured to display a template video frame image or a preview video frame image; and the plurality of material replacement controls float on the video frame display area. In this way, the problem that the video frame picture is small and inconvenient to view caused by setting replacement controls in an area outside the video frame picture can be better avoided. Exemplarily, a ratio of the video frame picture relative to the edit page is close to 1, that is, the video frame picture is played in a full-screen mode, which is more convenient for a special population such as the elderly to view, and effectively guarantees a viewing experience of the user. In addition, considering that if a plurality of functional information is piled up in the edit page, user may easily feel a pressure for edit, and the user may have no way to start. The foregoing manner displays only a few basic material replacement controls, and on the basis of giving a necessary edit guidance and prompt to the user, the page may also be simplified as much as possible, which also facilitates user operation.

Further, in the embodiment of the present disclosure, in response to receiving a confirmation instruction of the user for the preview video frame image, the preview video frame image is synthesized into the target video, so that the user saves or shares the target video to a specified platform.

In conclusion, the video edit method provided by the embodiment of the present disclosure firstly provides a simpler and more convenient video editing path, which is simple and easy to understand, highly oriented, can well guide a user to firstly select a video template and then select the required updated material through a material replacement control, and directly replace a template material corresponding to the updated material in the video template by the updated material, so as to quickly generate a preview video frame image based thereupon. The embodiment of the disclosure provides material replacement controls of a plurality of material categories for the user, and different material replacement controls can correspond to different replacement pages. The above mode hierarchically presents information by splitting functional levels, reducing noise and the like, which reduces information density of each page, enhances effectiveness of key information, and better facilitates user's understanding and operating. The above mode effectively improves the video edit convenience of a population such as the elderly population, shortens creation thinking time of a user, and better guarantees user experience.

The embodiments of the present disclosure do not limit the application scenario of the foregoing video editing method. For example, a software application adopting the foregoing video editing method may be provided separately for the elderly, or a special mode such as an elderly mode may also be set up on the basis of an existing video editing software, and the foregoing video editing method is executed when the mode is in a turned-on state.

Corresponding to the foregoing video editing method, FIG. 8 is a schematic structural diagram of a video editing apparatus provided by an embodiment of the present disclosure, which may be implemented in software and/or hardware and generally integrated into an electronic device. As shown in Fig. 8, the video editing apparatus comprises:
a first displaying module 802 configured to, in response to a user selecting a target video template from a plurality of video templates, display a template video frame image corresponding to the target video template and material replacement controls of a plurality of material categories on an edit page, wherein the template video frame image is formed by editing a template material corresponding to the target video template according to an editing operation sequence corresponding to the target video template;
a page switching module 804 configured to, in response to a user selecting a target replacement control from a plurality of material replacement controls, switch to a target replacement page corresponding to the target replacement control, wherein an alternative material or a content input area is displayed in the target replacement page;
a replacing module 806 configured to obtain a content in the content input area or a material selected by the user on the target replacement page as an updated material, and to replace a template material corresponding to the updated material in the target video template by the updated material; and
a second displaying module 808 configured to edit the material in the target video template with material(s) replaced according to the editing operation sequence, to generate a preview video frame image, and to display the preview video frame image on the edit page.

The video editing flow provided by the above apparatus of the embodiment of the present disclosure is simple and easy to understand, highly oriented, and can well guide a user to firstly select a video template and then select the required updated material through a material replacement control, and directly replace a template material corresponding to the updated material in the video template by the updated material, so as to quickly generate a preview video frame image based thereupon. Embodiments of the present disclosure provide material replacement controls of a plurality of material categories for the user, different material replacement controls can correspond to different replacement pages, which better facilitates user's understanding and operating. By replacing the material in the video template, an effect required by the user can be quickly and conveniently achieved. In summary, the above mode effectively improves the convenience of editing video by a population such as the elderly, and better guarantees user experience.

In some embodiments, the video editing apparatus further includes a template displaying module configured to display a plurality of theme categories on a first display page; and in response to the user selecting the target theme category from the plurality of theme categories, display a plurality of video templates under the target theme category on a second display page.

In some embodiments, the template displaying module is specifically configured to: display one of a plurality of video templates under the target theme category on the second display page; and in response to a template switching operation of the user, display the switched video template on the second display page based on a predetermined sorting of the plurality of video templates under the target theme category.

In some embodiments, the template displaying module is specifically configured to: display a plurality of theme category cover images on the first display page, wherein a theme category cover image is marked with a theme category name.

In some embodiments, material replacement controls of the plurality of material categories includes an image material replacement control, a text replacement control, and a music replacement control.

In some embodiments, in case the target replacement control includes an image material replacement control, a classified image material is displayed on the target replacement page according to a predetermined classification dimension.

In some embodiments, the classification dimension includes one or more of a time dimension, a location dimension, and a theme dimension.

In some embodiments, the apparatus further includes an identifying module configured to identify a material selected by the user in the image material in a specified manner on the target replacement page, wherein the specified manner includes one or more of a highlighting manner, a digital marking manner, and a slot filling manner.

In some embodiments, in case the target replacement control includes a text replacement control, a content input area for the user to input text by handwriting is displayed on the target replacement page.

In some embodiments, in case the target replacement control includes a music replacement control, a slidable candidate music list is displayed on the target replacement page, and the number of pieces of candidate music simultaneously displayed on the target replacement page by the candidate music list is not higher than a predetermined number threshold.

In some embodiments, a video frame display area is disposed on the edit page, and the video frame display area is configured to display the template video frame image or the preview video frame image; a ratio of the video frame display area to the edit page is greater than a predetermined threshold, and a plurality of material replacement controls float on the video frame display area.

The video editing apparatus provided by the embodiments of the present disclosure may perform the video editing method provided by any embodiment of the present disclosure, and has functional modules and beneficial effects corresponding to the method performed.

A person skilled in the art may clearly understand that, for the convenience and brevity of description, the specific working process of the apparatus embodiments described above may refer to the corresponding processes in the method embodiments, and details are not described herein again.

An embodiment of the present disclosure provides an electronic device, including: a processor; a memory configured to store instructions executable by the processor, wherein the processor is configured to read the executable instructions from the memory and execute the instructions to implement the foregoing video editing method.

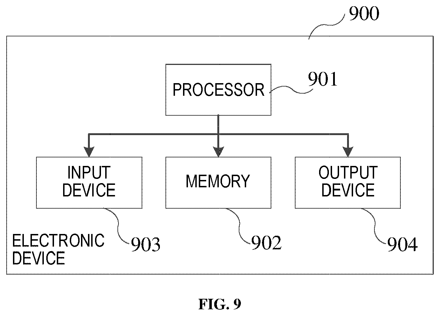

FIG. 9 is a schematic structural diagram of an electronic device provided by an embodiment of the present disclosure. As shown in FIG. 9, the electronic device 900 includes one or more processors 901 and a memory 902.

The processor 901 may be a central processing unit (CPU) or a processing unit of another form having data processing capability and/or instruction executing capability, and may control other components in the electronic device 900 to perform desired functions.

The memory 902 may include one or more computer program products, and the computer program product may include various forms of computer-readable storage mediums, such as volatile memory and/or non-volatile memory. The volatile memory may include, for example, a random access memory (RAM) and/or a cache memory. The non-volatile memory may include, for example, a read-only memory (ROM), a hard disk, a flash memory, or the like. The computer readable storage medium may store one or more computer program instructions, and the processor 901 may execute the program instructions to implement the video editing method and/or other desired functions of the embodiments of the present disclosure described above. Various contents such as input signals, signal components, noise components, and the like may also be stored in the computer-readable storage medium.

In one example, the electronic device 900 may further include an input device 903 and an output device 904 which are interconnected by a bus system and/or another form of connection mechanism (not shown).

In addition, the input device 903 may further include, for example, a keyboard, a mouse, and the like.

The output device 904 may output various information to the outside, including determined distance information, direction information, or the like. The output device 904 may include, for example, a display, a speaker, a printer, and a communication network and its connected remote output apparatuses, among others.

Of course, for simplicity, only some of the components related to the present disclosure in the electronic device 900 are shown in FIG. 9, and components such as a bus, an input/output interface and the like are omitted. In addition, according to a specific application situation, the electronic device 900 may further include any other suitable components.

In addition to the foregoing method and device, an embodiment of the present disclosure may further be a computer program product, including computer program instructions that, when executed by a processor, cause the processor to perform the video editing method provided by the embodiments of the present disclosure.

The computer program product may include program codes for performing operations of the embodiments of the present disclosure written in any combination of one or more programming languages, including an object-oriented programming language, such as Java, C++, or the like, and also a conventional procedural programming language, such as a "C" language or a similar programming language. The program codes may be executed entirely on a user computing device, executed partially on a user device, executed as a stand-alone software package, executed partially on a user computing device and partially on a remote computing device, or executed entirely on a remote computing device or server.

In addition, the embodiments of the present disclosure may further be a computer-readable storage medium having stored thereon computer program instructions that, when executed by a processor, cause the processor to perform the video editing method provided in the embodiments of the present disclosure.

The computer-readable storage medium may adopt any combination of one or more readable mediums. The readable medium may be a readable signal medium or a readable storage medium. The readable storage medium may include, but is not limited to, an electric, magnetic, optical, electromagnetic, infrared, or semiconductor system, apparatus, or device, or any combination of the foregoing. More specific examples (non-exhaustive list) of readable storage medium include: an electrical connection having one or more wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

An embodiment of the present disclosure further provides a computer program product, including a computer program/instruction, wherein the computer program/instruction, when executed by a processor, implements the video editing method in the embodiments of the present disclosure.

It should be noted that, in this specification, relational terms such as "first", "second", etc. are merely used to distinguish one entity or operation from another entity or operation, and do not necessarily require or imply that any such actual relationship or sequence exists between these entities or operations. Moreover, terms "include", "comprise" or any other variation thereof are intended to cover a non-exclusive inclusion, such that a process, method, article, or device comprising a series of elements includes not only those elements, but also other elements not expressly listed, or elements inherent to such a process, method, article, or device. Without more limitations, an element defined by statement "include one" does not preclude the presence of other identical element(s) in the process, method, article, or device that includes the element.

The above descriptions are merely specific embodiments of the present disclosure, so that those skilled in the art can understand or implement the present disclosure. Various modifications to these embodiments will be apparent to those skilled in the art, and the general principles defined herein may be implemented in other embodiments without departing from the spirit or scope of the present disclosure. Accordingly, the present disclosure will not be limited to these embodiments described herein, but is to be accorded with the widest scope consistent with the principles and novel features disclosed herein.

## Claims

1. A method of video editing, comprising:
in response to a user selecting a target video template from a plurality of video templates, displaying material replacement controls of a plurality of material categories and a template video frame image corresponding to the target video template on an edit page, wherein the template video frame image is formed by editing a template material corresponding to the target video template based on an editing operation sequence corresponding to the target video template;
in response to the user selecting a target replacement control from the plurality of material replacement controls, switching to a target replacement page corresponding to the target replacement control, wherein an alternative material or a content input area is displayed in the target replacement page;
obtaining a content in the content input area or a material selected by the user on the target replacement page as an updated material, and replacing a template material corresponding to the updated material in the target video template with the updated material; and
editing the material in the target video template with the material replaced based on the editing operation sequence, generating a preview video frame image, and displaying the preview video frame image on the edit page.

2. The method according to claim 1, wherein before in response to the user selecting the target video template from the plurality of video templates, the method further comprises:
displaying a plurality of theme categories on a first display page; and
in response to the user selecting a target theme category from the plurality of theme categories, displaying a video template under the target theme category on a second display page.

3. The method according to claim 2, wherein displaying the video template under the target theme category on the second display page comprises:
displaying one of a plurality of video templates under the target theme category on the second display page; and
in response to a template switching operation of the user, displaying the switched video template on the second display page based on a predetermined sorting of the plurality of video templates under the target theme category.

4. The method according to claim 2, wherein displaying the plurality of theme categories on the first display page comprises:
displaying a plurality of theme category cover images on the first display page, wherein the theme category cover image is marked with a theme category name.

5. The method according to claim 1, wherein material replacement controls of the plurality of material categories comprise an image material replacement control, a text replacement control, and a music replacement control.

6. The method according to claim 1, wherein in response to that the target replacement control comprises an image material replacement control, a classified image material is displayed on the target replacement page based on a predetermined classification dimension.

7. The method according to claim 6, wherein the classification dimension comprises one or more of a time dimension, a location dimension, and a theme dimension.

8. The method according to claim 6, further comprising:
identifying a material selected by the user in the image material based on a specified manner on the target replacement page, wherein the specified manner comprises one or more of a highlighting manner, a digital marking manner, and a slot filling manner.

9. The method according to claim 1, wherein in response to that the target replacement control comprises a text replacement control, a content input area for the user to input text by handwriting is displayed on the target replacement page.

10. The method according to claim 1, wherein in response to that the target replacement control comprises a music replacement control, a slidable candidate music list is displayed on the target replacement page, and a number of pieces of candidate music simultaneously displayed on the target replacement page by the candidate music list is not higher than a predetermined number threshold.

11. The method according to claim 1, wherein a video frame display area is disposed on the edit page, and the video frame display area is configured to display the template video frame image or the preview video frame image,
a ratio of the video frame display area to the edit page is greater than a predetermined threshold, and the plurality of material replacement controls float on the video frame display area.

12. The method according to claim 1, further comprising:
in response to receiving a confirmation instruction of the user for the preview video frame image, synthesizing the preview video frame image into a target video.

13. An apparatus for video editing, comprising:
a first displaying module configured to, in response to a user selecting a target video template from a plurality of video templates, display material replacement controls of a plurality of material categories and a template video frame image corresponding to the target video template on an edit page, wherein the template video frame image is formed by editing a template material corresponding to the target video template based on an editing operation sequence corresponding to the target video template;
a page switching module configured to, in response to the user selecting a target replacement control from the plurality of material replacement controls, switch to a target replacement page corresponding to the target replacement control, wherein an alternative material or a content input area is displayed in the target replacement page;
a replacing module configured to obtain a content in the content input area or a material selected by the user on the target replacement page as an updated material, and replace a template material corresponding to the updated material in the target video template with the updated material; and
a second displaying module configured to edit the material in the target video template with the material replaced based on the editing operation sequence, generate a preview video frame image, and display the preview video frame image on the edit page.

14. An electronic device, comprising:
a processor; and
a memory configured to store executable instructions by the processor,
wherein the processor is configured to read the executable instruction from the memory, and execute the instructions to implement the method of video editing of any of claims 1-12.

15. A computer-readable storage medium, wherein the storage medium stores a computer program, and the computer program is configured to perform the method of video editing of any of claims 1-12.
